Europäisches Patentamt

European Patent Office

Office européen des brevets

(11) Publication number: **0 383 473**
**A2**

## (12) EUROPEAN PATENT APPLICATION

(21) Application number: **90301243.3**

(22) Date of filing: **06.02.90**

(51) Int. Cl.⁵: **B60R 22/10, B60R 22/34, B60N 2/24**

(30) Priority: **15.02.89 GB 8903387**

(43) Date of publication of application:
**22.08.90 Bulletin 90/34**

(84) Designated Contracting States:
**DE FR GB IT SE**

(71) Applicant: **Römer-Britax Autogurte GmbH**
**Blaubeurer Strasse 35-37 Postfach 3449**
**D-7900 Ulm/Donau(DE)**

(72) Inventor: **Wetter, Hermann**
**Postfach 3449, Blaubeurer Strasse 35/37**
**D-7900 Ulm(DE)**

(74) Representative: **Hollinghurst, Antony**
**Britax Limited Patent Department**
**Chichester West Sussex PO19 2AQ(GB)**

(54) **Harness adjuster for child's seat.**

(57) A child's safety seat has a harness including a shoulder strap (23, 24) extending from an upper anchorage (31, 32) on the seat (10) and a lower strap (26, 28) extending from a lower anchorage (44) on the seat (10). Both the shoulder strap (23, 24) the lower strap (26, 28) have free ends passing through guide means at their anchorages (31, 32; 42, 44), and coupled to a retractor (40) for retraction and protraction thereby. The retractor (40) has manually operable control means which functions in a first state to block protraction both straps, which functions in a second state to allow protraction of the shoulder strap (23, 24) while blocking protraction of the lower strap (26, 28), and which functions in a third state to allow protraction of the lower strap (26, 28) while blocking protraction of the shoulder strap (23, 24).

FIG.1

## HARNESS ADJUSTER FOR CHILD'S SEAT

This invention relates to a child's safety seat having a harness including a shoulder strap extending from an upper anchorage on the seat and a lower strap extending from a lower anchorage on the seat, the shoulder strap having a free end passing through guide means at said upper anchorage, and coupled to a retractor for retraction and protraction thereby, the retractor having manually operable control means functioning in a first state to block protraction of the shoulder strap and in a second state to allow such protraction.

A safety seat of this type is disclosed in EP-A-0295833, in which there are two shoulder straps leading through guide means at respective upper anchorages and having their free ends connected to a common strap which is coupled to the retractor.

According to the invention, in a child safety seat of the type described above, the lower strap has a free end passing through guide means at said lower anchorage, such free end being coupled to the retractor which functions to block protraction thereof in both its first and second states and which functions in a third state to allow protraction of the lower strap while blocking protraction of the shoulder strap.

In one form of the invention, the retractor comprises first and second spindles, the shoulder strap being coupled to the first spindle and the lower strap being coupled to the second spindle, and the control means comprises a shaft having a manually operable knob on one end journalled for both rotational and limited axial movement and coupled to clutch means for selectively rotatably coupling the shaft to each of the spindles, axial movement of the shaft causing the control means to change between its three states.

The clutch means may comprise a first gear wheel fast with the first spindle, a second gear wheel fast with the second spindle, and a third gear wheel fast with the shaft, axial movement of the shaft being operative to cause the third gear wheel to engage with either the first gear wheel or the second gear wheel. In addition, the control means may include first and second pawls arranged to engage with formations on the first and second spindles so as to block protraction therefrom, the shaft being coupled to the first and second pawls so as to cause disengagement of the first pawl when the third gear wheel is in engagement with the first gear wheel and to cause disengagement of the second pawl when the third gear wheel is in engagement with the second gear wheel.

In one form of the invention, the control means is arranged to block both protraction and retraction of each of the retractors. In this case, the first and second pawls may be arranged to engage with the first and second gear wheels respectively.

An embodiment of the invention will now be described, by way of example, with reference to the accompanying drawings, in which:

Figure 1 is a front view of a child safety seat in accordance with the invention;

Figure 2 is a cross-sectional view taken on the line 2 - 2 in Figure 1;

Figure 3 is a schematic plan view of the retractors and control means of the safety seat shown in Figure 1, with the control means in its first state, the brackets which support the retractor mechanism on the under side of the seat being shown in cross-section;

Figure 4 is a schematic plan view similar to Figure 3 but with the control means in its second state;

Figure 5 is a schematic plan view, similar to Figures 3 and 4, with the control means in its third state;

Figure 6 is a plan view from below of an alternative retractor mechanism for use with a child safety seat of the type illustrated in Figure 1;

Figure 7 is a cross-sectional view taken on the line 6 - 6 in Figure 6 and showing the mechanism fitted to the underside of a seat;

Figure 8 is a cross-sectional view taken on the line 8-8 in Figure 6; and

Figure 9 is a cross-sectional view taken on the line 9 - 9 in Figure 6.

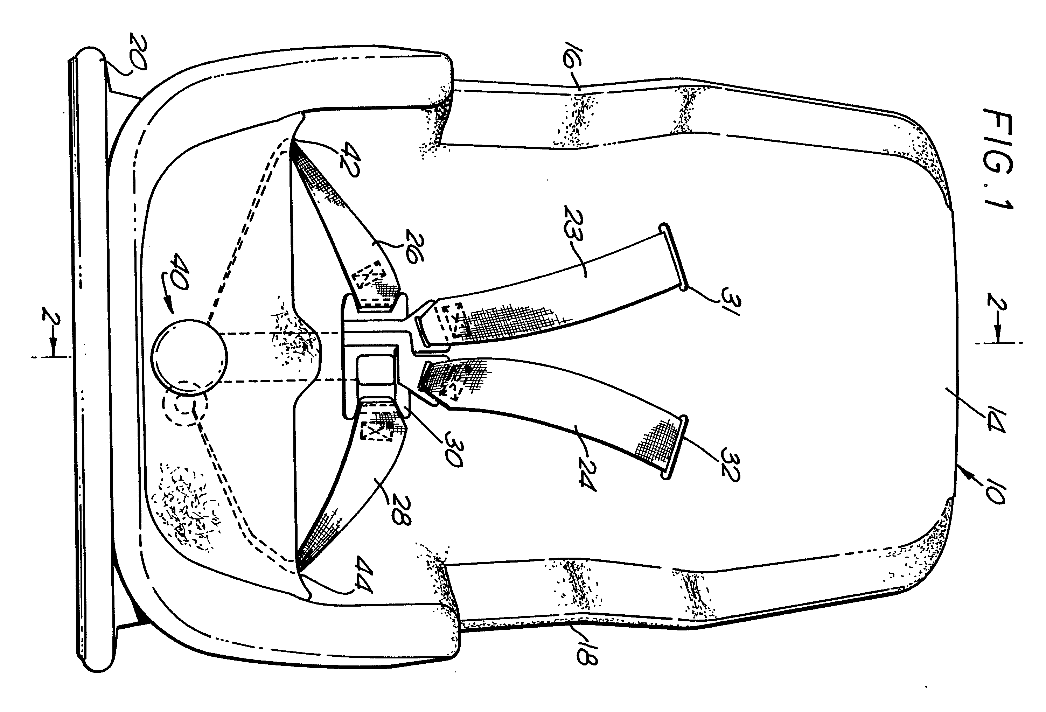

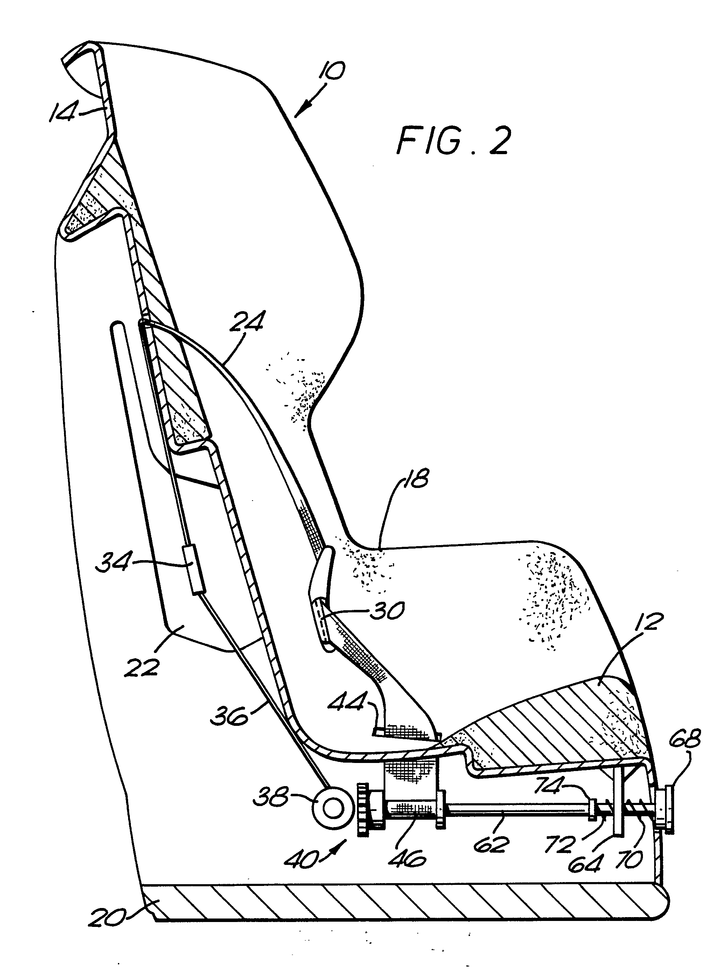

Referring to Figures 1 and 2, a child's safety seat in accordance with the invention comprises a seat body 10 having a seat portion 12 and a back rest portion 14, together with a pair of side flanges 16 and 18 which extend both above and below the seat portion 12 and in front of and behind the back rest portion 14. The bottom edges of the flanges 16 and 18 are connected by a base portion 20 and each flange contains a respective elongate opening 22 located behind the back rest portion 14 through which an adult vehicle seat belt (not shown) may pass in order to secure the seat 10 to an adult vehicle seat.

The seat 10 is equipped with a harness comprising two shoulder straps 23 and 24 and two lap straps 26 and 28 which can be fastened together by a four-part buckle 30. The shoulder straps 23 and 24 project through respective slots 31 and 32 in the back rest portion 14 and their ends are attached by a permanent coupling 34 to a common strap 36 which is wound onto a first spindle 38 of a retractor mechanism 40. Similarly, the lap straps 26 and 28 extend through slots 42 and 44 in the seat portion 12 and their ends are both connected to the same second spindle 46 of the retractor mechanism 40.

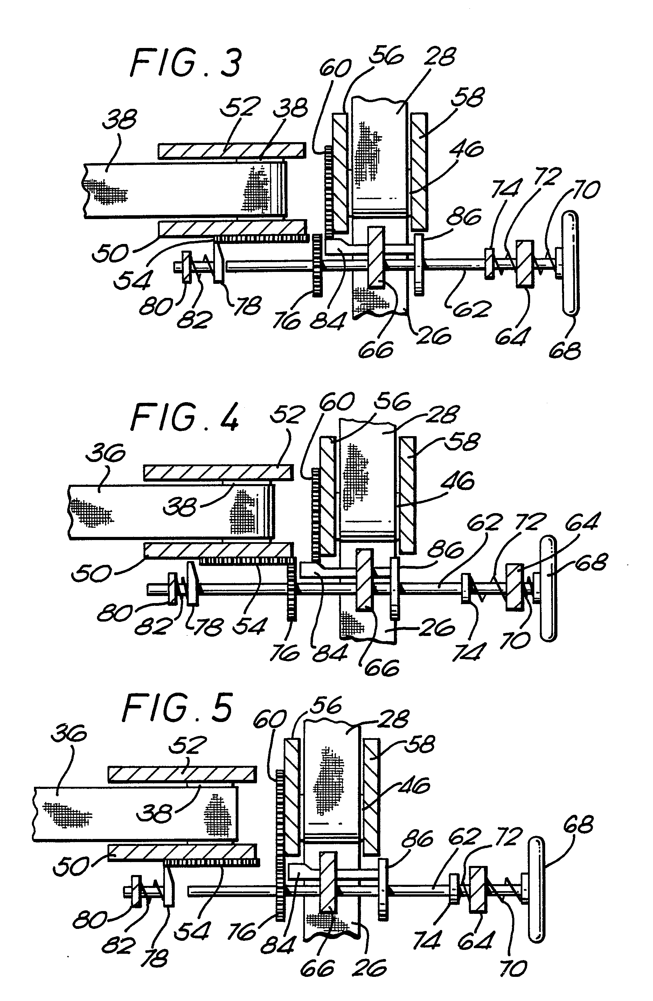

Referring now to Figures 3, 4 and 5, the first spindle 38 is journalled between brackets 50 and 52 which project downwardly from the seat portion 10. One end of the shaft 38 projects through the bracket 50 and has a first gear wheel 54 journalled thereon. Similarly, the second spindle 46 is journalled between brackets 56 and 58 which project downwardly from the seat portion 10. The spindle 46 projects through the bracket 56 and has a second gear wheel 60 mounted on the end thereof for simultaneous rotation.

A drive shaft 62 is journalled in brackets 64 and 66 which project downwardly from the seat portion 12. As can be seen from Figure 2, the shaft 62 projects outwardly from the front of the seat 10 below the seat portion 12 and has a manually operable drive knob 68 mounted on its projecting end. In addition to rotation, the shaft 62 is capable of axial movement through a limited range and is biased to the centre of this range of movement by two compression springs 70 and 72 which engage between the knob 68 and the bracket 64 and between the bracket 64 and an abutment 74 on the shaft 62 respectively.

A third gear wheel 76 is keyed to the drive shaft 62 for simultaneous rotation and axial movement therewith. The third gear wheel 76 has peripheral teeth shaped to be engageable with the teeth of the first gear wheel 54 and the teeth of the second gear wheel 60. However, when the shaft is in the intermediate position of its range of axial movement, as shown in Figure 3, the third gear wheel 76 is located between the first and second gear wheels 54 and 60 not in engagement with either of them. A first pawl 78, mounted on a bracket 80 projecting downwardly from the seat portion 10, is biased by a compression spring 82 into engagement with the first gear wheel 54 so as to prevent both protraction and retraction of the common strap 36 to which the two shoulder straps 23 and 24 are connected.

A second pawl 84 is slidably mounted in the bracket 66 for engagement with the second gear wheel 60 so as to prevent both protraction and retraction of the lap straps 26 and 28. The other end of the pawl 84 is secured to a link 86 which is journalled on the drive shaft 62 so as to be displaceable axially therewith while not obstructing rotation thereof.

If it is desired to adjust the shoulder straps 23 and 24, the knob 68 is pushed inwardly as illustrated in Figure 4. The end of the shaft 62 abuts against the pawl 78, displacing it out of engagement with the first gear wheel 54 and, at the same time, the third gear wheel 76 moves into driving engagement therewith. The knob 68 can then be rotated to cause simultaneous protraction or retraction of the shoulder straps 23 and 24 as required. When the knob 68 is released, the spring 70 returns the shaft 62 to its intermediate position, as illustrated in Figure 3, and the pawl 78 re-engages with the gear wheel 54.

If it is desired to adjust the lap straps 26 and 28, the knob 68 is pulled outwardly as illustrated in Figure 5. The pawl 84 is pulled out of engagement with the gear wheel 60 as the third gear wheel 76 moves into engagement therewith. Rotation of the knob 68 then causes simultaneous retraction of the lap straps 26 and 28 as required. When the knob 68 is released, the spring 72 returns the shaft 62 to its original position, and the pawl 84 re-engages with the second gear wheel 60, as illustrated in Figure 3.

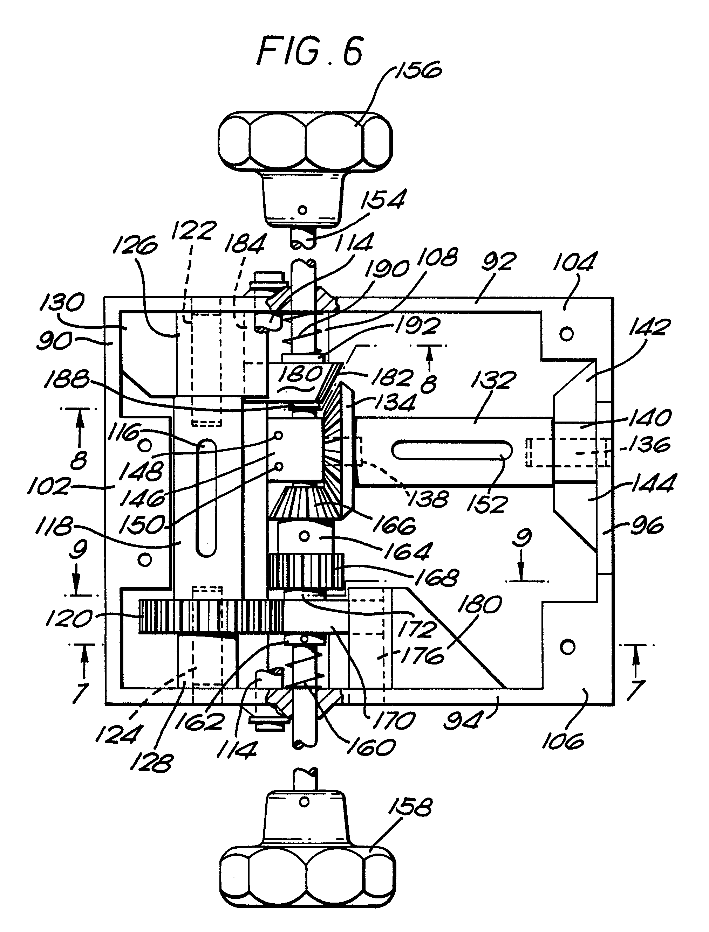

Figures 6 to 9 illustrate an alternative retractor mechanism which can be fitted to a child's safety seat similar to the seat illustrated in Figures 1 and 2. The mechanism illustrated in Figures 6 to 9 differs from that illustrated in Figures 2 to 5 in two principal respects. Firstly, the retractor for the lap straps is mounted behind the retractor for the shoulder straps, thereby enabling the lap straps to be located closer to the seat back. Secondly, the adjustment knob below the front edge of the seat is replaced by two adjustment knobs located below the sides of the seat, thereby avoiding any risk of impact on the knob causing injury to the legs of a child occupant of the seat.

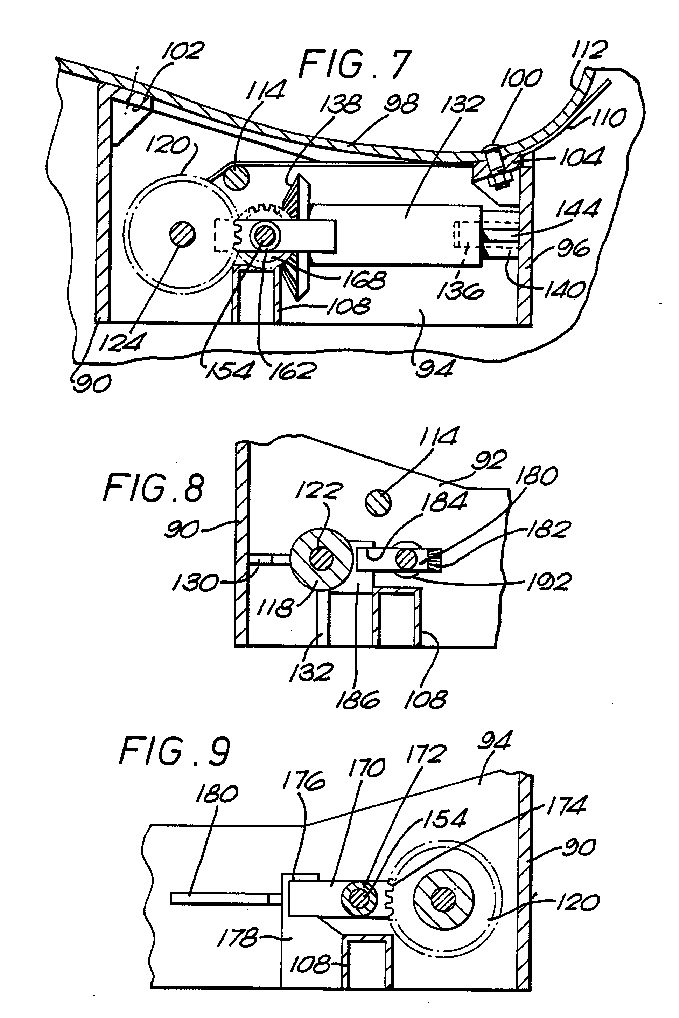

Referring particularly to Figures 6 and 7, the retractor mechanism is accommodated in a rectangular housing having a front wall 90, first and second side walls 92 and 94 and a rear wall 96, the housing being secured to the underside of the seat portion 98 of a child's safety seat by bolts 100 engaging in holes in a central front tab 102 on the front wall 90 and rear corner tabs 104 and 106 at each end of the rear wall 96. A hollow rectangular beam 108 extends between the side walls 92 and 94 parallel to the front and rear walls 90 and 96.

A common connecting strap 110 (Figure 7), similar to the common strap 36 connected to the shoulder straps 23 and 24 of Figures 1 and 2, is led round the bottom of the seat back 112 of the child safety seat and over a guide bar 114 (shown broken away in Figure 6) which extends between the side walls 92 and 94 above the beam 108. The common strap 110 is connected to a slot 116 (Figure 6) in a lap strap spindle 118 which has a spur gear wheel 120 fast with one end. The spindle 118 is journalled on bearing pins 123 and 124, the pin 123 being mounted in a boss 126 on the first side wall 92 and the bearing pin 94 in a boss 128 on the second side wall 94. The boss 126 is braced against the front wall 90 by a web 130, and from below by a second web 132 (Figure 8).

A spindle 132 has a bevel gear wheel 134 fast with one end and is journalled on bearing pins 136 and 138. The pin 136 is mounted in a bearing boss 140 on the rear wall 96 and has two laterally extending stabilising webs 142 and 144. The pin 138 projects from a bearing block 146 which is secured to the beam 108 by screws 148 and 150. The two lap straps (not shown) are received in a slot 152 in the spindle 132 and extend therefrom in a similar manner to the lap straps 26 and 28 illustrated in Figures 1 and 2.

A drive shaft 154, for adjusting the straps would on the spindles 118 and 132, is located above the beam 108 and is journalled in holes in the side walls 92 and 94 and in the mounting block 146. A respective knob 156, 158 is mounted on each end of the shaft 154, the overall length of which is such that the knob 156 is accessible from one side of the seat and the knob 158 from the other. The shaft 154 is slidable axially in its bearings and is biassed in the direction of the knob 156 by a compression spring 160 which engages between the inside of the second side wall 94 and a collar 162 which is keyed to the shaft 154.

A gear unit 164, having a bevel gear 166 on one end and a spur gear 168 on the other, is keyed to the shaft 154 between the bearing block 146 and the collar 162. When the shaft 154 is in the position illustrated in Figure 6, the bevel gear 166 on the gear unit 164 engages with the bevel gear 134 on the spindle 132 so that rotation of either of the knobs 156 and 158 causes protraction or retraction of the lap straps wound on the spindle 132. If the shaft 154 is displaced axially against the action of the spring 160, so as to move the knob 156 towards the side wall 92 and the knob 158 away from the side wall 94, the bevel gear 166 disengages from the bevel gear 134 and the spur gear 168 engages with the spur gear 120 on the spindle 118. Rotation of either of the knobs 156 and 158 now causes protraction or retraction of the common connecting strap 110 would on the spindle 118.

In order to prevent rotation of the spindle 118 when its spur gear 120 is disengaged from the spur gear 168 on the gear unit 164, a first pawl 170 is journalled on the shaft 154 between the collar 162 and a spacer washer 172 which engages with the adjacent end face of the gear unit 164. The first pawl 170 has teeth 174 on one end shaped to engage with the teeth of the spur gear 120. The first pawl 170 is held against rotation about the axis of the shaft 154 by engagement of its other end in a guide channel 176 formed in a guide member 178 which is mounted on the beam 108 and braced against the second side wall 94 by a web 180. When the shaft 154 is displaced axially to bring the spur gear 168 into engagement with the spur gear 120, the first pawl 170 is displaced along the channel 176 out of engagement with the spur gear wheel 120. The thickness of the washer 172 is such that the first pawl 170 does not disengage from the spur gear wheel 120 until after the spur gear wheel 168 has come into engagement therewith.

In order to prevent rotation of the spindle 132 when the bevel gear 134 thereon is out of engagement with bevel gear 166 on the shaft 154, a second pawl 180 is slidably mounted on the shaft 154 between the first side wall 92 and the mounting lock 146. The second pawl 180 has an inclined face at one end with teeth 182 shaped to be engageable with the teeth of the bevel gear 134 on the spindle 132. The other end of the second pawl 180˙ engages in a guide channel 184 formed in a guide block 186 which is mounted between the beam 108 and the mounting boss 126. A collar 188 is keyed to the shaft 154 between the second pawl 180 and the mounting block 146. The second pawl 180 is urged into engagement with the collar 188 by a compression spring 190 which engages between the first side wall 92 and a washer 192 abutting the second pawl 180.

The compression spring 190 is arranged to exert a greater force on the second pawl 180 than the compression spring 160 exerts on the collar 162 adjacent to the first pawl 170. The result is that the shaft 154 is normally held in a position in which the teeth 182 on the second pawl 180 engage with the bevel gear 134 while the teeth on the first pawl 170 remain in engagement with the spur gear 120, the position of the shaft 154 being such that neither the bevel gear 166 nor the spur gear 168 on the gear unit 164 are in engagement. Consequently, both spindles 118 and 132 are locked in position and the knobs 156 and 158 are freely rotatable. Pressure on the knob 158 towards the second wall 94 brings the bevel gear 166 on the gear unit 164 into engagement with the bevel gear 134 on the spindle 132, thereby permitting adjustment of the lap straps. Similarly, pressure on the knob 156 towards the first wall 92 brings the spur gear 168 into engagement with the spur gear 120 on the spindle 118, permitting adjustment of the shoulder straps.

Provision of two knobs 156 and 158 permits an adult located in front of the seat to grip each knob successively with alternate hands so that the shaft 154 can be rotated continuously without the need to re-engage the pawls 170 and 180 between each hand movement.

**Claims**

1. A child's safety seat having a harness including a shoulder strap (23, 24) extending from an upper anchorage (31, 32) on the seat (10) and a lower strap (26, 28) extending from a lower anchorage (42, 44) on the seat (10), the shoulder strap (23, 24) having a free end passing through guide means at said upper anchorage (31, 32), and coupled to a retractor (40) for retraction and protraction thereby, the retractor (38, 18) having manually operable control means (78, 170) functioning in a first state to block protraction of the shoulder strap (23, 24) and in a second state to allow such protraction, characterised in that the lower strap (26, 28) has a free end passing through guide means at said lower anchorage (42, 44), such free end being coupled to the retractor (40) which functions to block protraction thereof in both its first and second states and which functions in a third state to allow protraction of the lower strap (26, 28) while blocking protraction of the shoulder strap (23, 24).

2. A child's safety seat according to claim 1, wherein the retractor comprises first and second spindles, the shoulder strap (23, 24) being coupled to the first spindle (38, 118) and the lower strap (26, 28) being coupled to the second spindle (46, 132), and the control means comprises a shaft (62, 154) having a manually operable knob (68, 156) on one end journaled for both rotational and limited axial movement and coupled to clutch means (76, 170, 180) for selectively rotatably coupling the shaft (62, 154) to each of the spindles, axial movement of the shaft (62, 154) causing the control means to change between its three states.

3. A child's safety seat according to claim 2, wherein the clutch means comprises a first gear wheel (54, 120) fast with the first spindle (38, 118), a second gear wheel (60, 134) fast with the second spindle (46, 132), and a third gear wheel (76, 164) fast with the shaft (62, 154), axial movement of the shaft (62, 154) being operative to cause the third gear wheel (76, 164) to engage with either the first gear wheel (54, 120) or the second gear wheel (60, 134).

4. A child's safety seat according to claim 2 or 3, wherein the control means includes first and second pawls (78, 170; 84, 180) arranged to engage with formations on the first and second spindles (38, 118; 46, 132) so as to block protraction therefrom, the shaft (62, 154) being coupled to the first and second pawls (78, 170; 84, 180) so as to cause disengagement of the first pawl (78, 180) when the third gear wheel (76, 164) is in engagement with the first gear wheel (54, 120) and to cause disengagement of the second pawl (84, 180) when the third gear wheel (76, 164) is in engagement with the second gear wheel (60, 134).

5. A child's safety seat according to claim 4, wherein the first pawl (78, 180) is arranged to engage with the first gear wheel (54, 120) and the second pawl (84, 180) is arranged to engage with the second gear wheel (60, 134).

6. A child's safety seat according to claim 4 or 5, wherein one of the pawls (84, 170) is directly coupled to the shaft (62, 154) for simultaneous axial movement therewith and the other pawl (78, 180) is coupled to the shaft (62, 154) by coupling means (82, 190) allowing limited relative axial movement therebetween.

7. A child's safety seat according to any preceding claim, wherein the control means (78, 170) is arranged to block both protraction and retraction of both of the straps (23, 24; 26, 28).

FIG.1

FIG. 2

FIG.3

FIG.4

FIG.5

FIG.6

FIG. 7

FIG. 8

FIG. 9